# EUROPÄISCHE PATENTANMELDUNG

(11) **EP 4 609 934 A1**
(43) Veröffentlichungstag der Anmeldung: **03.09.2025**
(21) Anmeldenummer: 24160322.4
(22) Anmeldetag: 28.02.2024
(51) Int. Cl.: B01D 46/00, B01D 46/10

(54) **FILTERANORDNUNG MIT LUFTFILTER UND KOPFRAHMEN**

(71) Anmelder: Carl Freudenberg KG, 69469 Weinheim (DE)
(72) Erfinder: Schumacher, Sascha, 69483 Wald-Michelbach (DE); Holub, Tim, 69118 Heidelberg (DE)

(57) **Zusammenfassung**

Die Erfindung betrifft eine Filteranordnung (100) mit einem Luftfilter (10) und einem den Luftfilter (10) aufnehmenden Kopfrahmen (20), wobei der Luftfilter, ein kastenförmiger Boxtypefilter, (10) mindestens ein von einem Rahmen (11) eingefasstes Filterelement (12) aufweist. Erfindungsgemäß ist der Kopfrahmen (20) aus geraden Profilen (21) und winkligen Eckverbindern (22) zusammengesetzt. Eine solche Filteranordnung (100) ermöglich in vorteilhafter Weise zusätzliche Einsatzmöglichkeiten von Luftfiltern (10) und deren Einbau in Filteraufnahmen (40), welche einen Kopfrahmen (10) erfordern.

## Beschreibung

Die Erfindung betrifft eine Filteranordnung mit einem Luftfilter und einem den Luftfilter aufnehmenden Kopfrahmen, wobei der Luftfilter mindestens ein von einem Rahmen eingefasstes Filterelement aufweist.

### Stand der Technik

Aus dem Stand der Technik sind Filter zur Filtration von Fluiden bekannt, insbesondere von Luft. Hierzu werden die Filterelemente üblicherweise in Filtergehäuse eingesetzt und von Luft durchströmt.

Bekannt sind Schwebstofffilter in unterschiedlichsten Ausprägungen, so z.B. aus der DE 19601978 A1 und der DE 19545064 A1, welche in Einsatzgebieten mit hohen Anforderungen an die Reinluftqualität zum Einsatz gelangen. Diese Schwebstofffilter haben in der Regel eine quaderförmige Außenform.

Die DE 10 2007 006 103 B4 zeigt einen Kassettenfilter mit einem Rahmen aus zwei Gleichteilen. So soll dieser einfacher und kostengünstiger gefertigt werden können. Solche Kassettenfilter können besonders einfach in Filteraufnahmen eingeschoben und dank ihrer Kopfrahmen positioniert und arretiert werden.

In den dafür vorgesehenen Filteraufnahmen können jedoch keine üblichen Schwebstofffilter eingebaut werden ohne, dass zusätzliche Vorkehrungen zu deren Arretierung erforderlich wären.

### Aufgabenstellung

Aufgabe der vorliegenden Erfindung ist es daher eine Filteranordnung zu schaffen, welche mit einfachen und kostengünstigen Mitteln die Anbringung eines Kopfrahmens an einem insbesondere quaderförmigen Luftfilter ermöglicht.

### Technische Lösung

Gelöst wird diese Aufgabe durch eine Filteranordnung wie sie nachfolgend beschrieben und beansprucht ist.

Erfindungsgemäß wurde als vorteilhaft erkannt den Kopfrahmen aus einheitlichen Eckverbindern und in ihrer Länge auf die Abmaße des Luftfilters einfach anpassbaren geraden Profilen aufzubauen.

Die Filteranordnung weist einen Luftfilter und einen den Luftfilter aufnehmenden Kopfrahmen auf, wobei der Luftfilter mindestens ein von einem kastenförmigen Rahmen eingefasstes Filterelement besitzt und als kastenförmiger Boxtypefilter (Box-Type-Filter) ausgeführt ist. Solche Boxtypefilter werden auch als kastenförmige Kompaktfilter bezeichnet. Der kastenförmige Rahmen des Luftfilters kann z.B. aus geraden Profilen und winkligen Eckverbindern zusammengesetzt sein, kann ein extrudierter Rahmen sein oder aus an ihren jeweiligen Enden mit Gehrungsschnitten versehenen Leisten zusammengesetzt sein.

Der Kopfrahmen ist aus geraden Profilen und winkligen Eckverbindern zusammengesetzt. Die Eckverbinder können in großer Stückzahl als Gleichteile produziert werden. Der Kopfrahmen ist somit nicht materialeinheitlich-einteilig ausgeführt, also z.B. nicht als einteiliges Spritzgussteil gefertigt. Die gerade Profile können abhängig von den Dimensionen des Luftfilters, für welchen der Kopfrahmen dient, einfach abgelängt werden, z.B. durch Sägen oder Schneiden auf die richtige Länge gebracht werden. Gerade Profile und winklige Eckverbinder können für die Montage des Kopfrahmens dann einfach zusammengesetzt werden, z.B. durch Zusammenstecken. Eine solche Filteranordnung ermöglicht zusätzliche Einsatzmöglichkeiten von Luftfiltern und deren Einbau in Filteraufnahmen, welche einen Kopfrahmen erfordern.

In besonders vorteilhafter Weiterbildung der Filteranordnung weisen die Profile und Eckverbinder in ihrem Querschnitt die Form eines Rohres, insbesondere eines Vierkantrohres auf, mit daran auskragender Aufnahmerinne, wobei die Aufnahmerinne durch einen Steg am Vierkantrohr gebildet wird. Der Steg kann insbesondere in Verlängerung einer Seitenfläche des Vierkantrohres an dieses bündig angebunden sein und ins Innere des Kopfrahmens ragen, d.h. zu dessen zentraler Öffnung hin orientiert sein, sodass sich im Querschnitt durch das Profil in etwa ein eckiges b ergibt. Durch die Aufnahmerinne kann der Rahmen des Luftfilters aufgenommen werden. Auch kann die Aufnahmerinne eine Art Wanne bilden und dazu dienen Vergussmasse aufzunehmen.

In möglicher Ausgestaltung der Filteranordnung können die Eckverbinder auf Höhe der Aufnahmerinne und dieser zugewandt mit Öffnungen versehen sein. D.h. die Öffnungen können in derjenigen Seitenfläche der Eckverbinder eingebracht sein, welche zur Aufnahmerinne zeigt. Insbesondere kann je eine Öffnung an einem jeweiligen Ende eines jeden Eckverbinders vorgesehen sein, sodass ein Eckverbinder zwei Öffnungen aufweist.

In möglicher Weiterbildung können die Eckverbinder so ausgestaltet sein, dass diese jeweils in ihrer Gehrung, also dort wo die Rohre in einem Winkel aufeinanderstoßen, eine Trennwand aufweisen. Durch diese Trennwände werden in vorteilhafter Weise die Hohlräume im Inneren der Vierkantrohre voneinander getrennt. Kommt es nun zur Leckage im Bereich eines der Hohlräume, so kann Luft nicht in die angrenzenden Hohlräume und damit durch den ganzen Kopfrahmen strömen. Die Auswirkung der Leckage bleibt somit räumlich begrenzt.

In vorteilhafter Weiterbildung der Filteranordnung ist die Aufnahmerinne mit Vergussmasse befüllt und die Vergussmasse verbindet den Kopfrahmen stoffschlüssig mit dem Luftfilter. In Vorteilhafter Weise wird so eine leckagefreie Filteranordnung geschaffen.

Bei der Vergussmasse, einem Kleb- und Dichtstoff, kann es sich beispielsweise um PUR handeln.

Verfügen die Eckverbinder über die beschriebenen Öffnungen, so kann Vergussmasse ins Innere des Rohres eindringen und Eckverbinder und gerade Profile miteinander verkleben.

Bei der Fertigung der Filteranordnung wird Vergussmasse in die durch das Aufnahmerinne gebildete Wanne gegossen. Die Vergussmasse dringt durch die vorgesehenen Öffnungen in den Eckverbindern ins Innere des Rohres ein, insbesondere Vierkantrohres, und bewirkt so, dass die Elemente Eckverbinder und Profile miteinander verklebt werden. Der Luftfilter wird dann in das noch flüssige Vergussmassebett eingesetzt, so verklebt und kann zusätzlich dank einem Verrasten des Rahmens an einer Rastnase formschlüssig verbunden werden:
Dazu ist in einer vorteilhaften Ausgestaltung die Aufnahmerinne an ihrem freien Ende mit einer Kante in Form einer Rastnase versehen, zum Einrasten des Luftfilters, genauer: von dessen Rahmen.

In möglicher Ausgestaltung der Filteranordnung sind die geraden Profile Stranggussteile. Die Eckverbinder können Spritzgussteile sein. Gerade Profile und Eckverbinder sind bevorzugt aus Kunststoff, z.B. aus ABS oder PS.

Alternativ ist auch möglich, dass z.B. die Eckverbinder aus Kunststoff und die geraden Profile aus Aluminium sind.

In möglicher Ausgestaltung der Filteranordnung ist der Kopfrahmen aus vier geraden Profilen und vier rechtwinkligen Eckverbindern zusammengesetzt und rechteckig ausgeführt und kann somit einen Luftfilter mit rechteckigen Außenabmaßen einfassen. Für einen quadratischen Kopfrahmen weisen die geraden Profile identische Längen auf.

In einer Ausführungsvariante der Filteranordnung ist an dem Kopfrahmen eine umlaufende Dichtung angebracht, zum Abdichten der Filteranordnung gegenüber einer diese aufnehmenden Filteraufnahme. Die Dichtung kann z.B. aufgeklebt oder angespritzt sein.

In möglicher Ausgestaltung der Filteranordnung ist der Luftfilter als quaderförmiger Schwebstofffilter und sein Rahmen als Kunststoffrahmen ausgeführt. Schwebstofffilter sind Filter zur Abscheidung von Schwebstoffen aus der Luft. Sie zählen zu den Tiefenfiltern und scheiden Partikel mit einem aerodynamischen Durchmesser kleiner 1 µm ab, z. B. Bakterien und Viren, Pollen, Milbeneier und -ausscheidungen, Stäube, Aerosole und Rauchpartikel. Schwebstofffilter sind aus dem Stand der Technik bekannt und erfahren durch die Ergänzung mit einem Kopfrahmen zu einer Filteranordnung zusätzliche Anwendungsmöglichkeiten.

In Weiterbildung besitzt der Schwebstofffilter als Filtermedium plissiertes Glasfaserpapier und ist damit besonders geeignet zum Einsatz als Schwebstoff-, Reinluft-, HEPA- oder UPLA-Filter.

In einer speziellen Weiterbildung kann ein weiterer den Luftfilter aufnehmender Kopfrahmen vorgesehen sein, wobei beide Kopfrahmen beabstandet zueinander sind. Der zweite Kopfrahmen könnte somit auch als "Fußrahmen" bezeichnet werden, da er am anderen Ende des Luftfilters angeordnet ist. Aufbau und Ausgestaltung dieses zweiten Kopfrahmens kann sein wie obenstehend ausgeführt. Eine solche Filteranordnung kann in eine entsprechend komplementär ausgestaltete Filteraufnahme eingeschoben werden, wobei die Kopfrahmen als eine Art die Filteranordnung führendes Schienensystem wirken.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a und b: den Zusammenbau einer Filteranordnung in perspektivischer Ansicht
- Fig. 2: den Aufbau eines Kopfrahmens in einer Ausschnittsdarstellung
- Fig. 3a und b: unterschiedliche Ausführungsformen des Kopfrahmens in Schnittdarstellungen

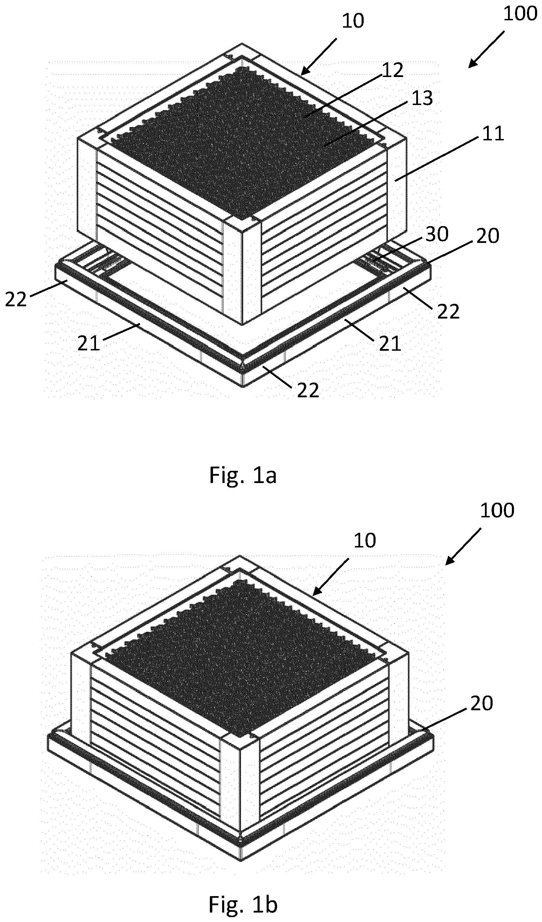

Fig. 1a und b zeigen den Zusammenbau einer Filteranordnung 100 in perspektivischer Ansicht.

Die Filteranordnung 100 besitz einen quaderförmigen Luftfilter 10 und einen den Luftfilter 10 aufnehmenden rechteckigen Kopfrahmen 20, wobei der Luftfilter 10 mindestens ein von einem Rahmen 11 eingefasstes Filterelement 12 aufweist. Es können auch mehrere in Reihe geschaltete Filterelemente vorgesehen sein (hier nicht zu sehen). Bei dem Luftfilter kann es sich um einen Schwebstofffilter handeln, der als Filtermedium 13 seines Filterelements 12 plissiertes Glasfaserpapier besitzt.

Der rechteckige Kopfrahmen 20 ist aus vier geraden Profilen 21 und vier rechtwinkligen Eckverbindern 22 zusammengesetzt. Die geraden Profile 21 können dabei Stranggussteile und die Eckverbinder 22 Spritzgussteile sein.

Wie dargestellt wird der Luftfilter 10 in den Kopfrahmen 20 eingesetzt und so eine Filteranordnung 100 geschaffen.

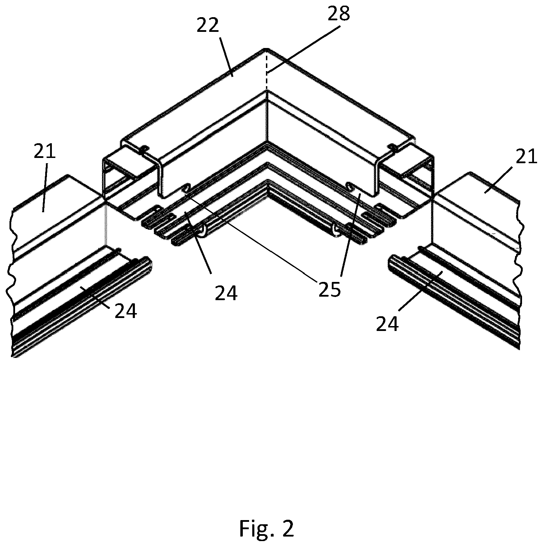

Fig. 2 zeigt den Aufbau eines Kopfrahmens 10, wobei der Ausschnitt einer seiner Ecken in der Darstellung zu erkennen ist. Zwei gerade Profile 21 können auf den Eckverbinder 22 aufgeschoben werden. Eine mögliche Position einer Trennwand 28 in der Gehrung der Eckverbinder 22 ist durch eine gestrichelte Linie dargestellt.

Die geraden Profile 21 und Eckverbinder 22 weisen in ihrem Querschnitt die Form eines Vierkantrohres 23 auf mit einer daran bündig und in Verlängerung der unteren Seitenfläche des Vierkantrohres 23 auskragenden Aufnahmerinne 24, wobei die Aufnahmerinne 24 durch einen Steg am Vierkantrohr 23 gebildet wird. Die Auffangrinne bildet eine Art Wanne und kann mit Vergussmasse befüllt werden (hier nicht dargestellt).

Der Eckverbinder 22 ist auf Höhe der Aufnahmerinne 24 und dieser zugewandt mit zwei Öffnungen 25 versehen.

Die Wirkweise der Öffnungen 25 zusammen mit der Vergussmasse 30 wird nachfolgend beschrieben.

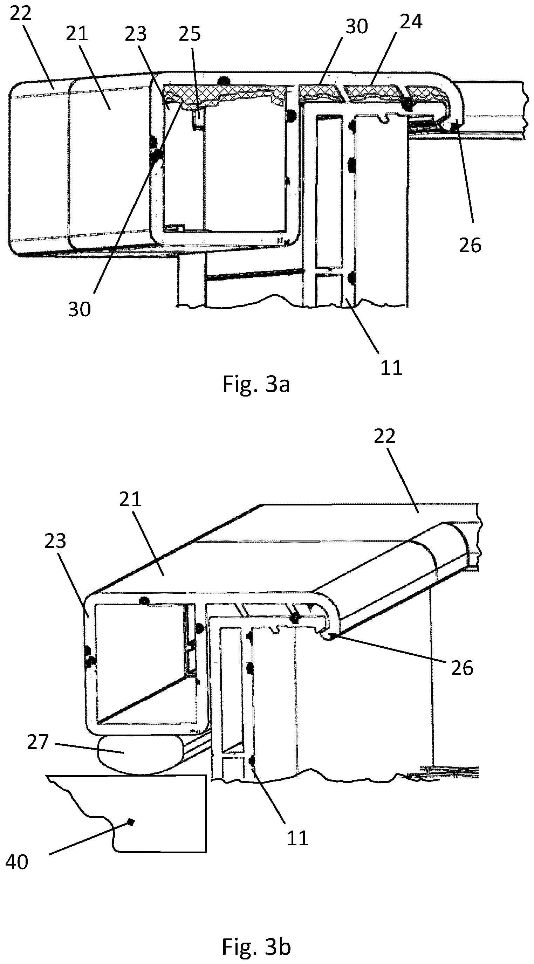

Fig. 3a und b zeigen unterschiedliche Ausführungsformen des Kopfrahmens 10 in Schnittdarstellungen.

Die Aufnahmerinne 24 ist mit Vergussmasse 30 befüllt und die Vergussmasse 30 verbindet stoffschlüssig den Kopfrahmen 20 mit dem Rahmen 11 des Luftfilter 10. Durch die Öffnung 25 ist Vergussmasse 30 hindurchgeflossen, welcher eine stoffschlüssige Verbindung des Eckverbinders 22 mit dem angrenzenden geraden Profil 21 bewirkt.

Die Aufnahmerinne 24 ist an ihrem freien Ende mit einer Kante in Form einer Rastnase 26 versehen, zum Einrasten des Rahmens 11 des Luftfilters 10. Zusätzlich zur stoffschlüssigen wird so auch noch eine formschlüssige Verbindung realisiert.

In Fig. 3b ist eine alternative Ausführung gezeigt, bei welcher an dem Kopfrahmen 20 eine umlaufende Dichtung 27 angebracht ist, zum Abdichten der Filteranordnung 100 gegenüber einer diese aufnehmenden Filteraufnahme 40. Die Position der Filteraufnahme 40 ist hier nur angedeutet. Die Vergussmasse 30 wurde zur Vereinfachung der Darstellung weggelassen.

### Bezugszeichenliste

- 10: Luftfilter
- 11: Rahmen
- 12: Filterelement
- 13: Filtermedium

- 20: Kopfrahmen
- 21: gerades Profil
- 22: Eckverbinder
- 23: Vierkantrohr
- 24: Aufnahmerinne
- 25: Öffnung
- 26: Rastnase
- 27: Dichtung
- 28: mögliche Position Trennwand

- 30: Vergussmasse

- 40: Position Filteraufnahme

- 100: Filteranordnung

## Patentansprüche

1. Filteranordnung (100) mit einem Luftfilter (10) und einem den Luftfilter (10) aufnehmenden Kopfrahmen (20), wobei der Luftfilter (10) als kastenförmiger Boxtypefilter ausgeführt ist und mindestens ein von einem kastenförmigen Rahmen (11) eingefasstes Filterelement (12) aufweist, **dadurch gekennzeichnet, dass**
der Kopfrahmen (20) aus geraden Profilen (21) und winkligen Eckverbindern (22) zusammengesetzt ist.

2. Filteranordnung nach Anspruch 1,
**dadurch gekennzeichnet, dass**
die geraden Profile (21) und Eckverbinder (22) in ihrem Querschnitt die Form eines Vierkantrohres (23) aufweisen mit einer daran auskragender Aufnahmerinne (24), wobei die Aufnahmerinne (24) durch einen Steg am Vierkantrohr (23) gebildet wird.

3. Filteranordnung nach Anspruch 2,
**dadurch gekennzeichnet, dass**
die Eckverbinder (22) auf Höhe der Aufnahmerinne (24) und dieser zugewandt mit Öffnungen (25) versehen sind.

4. Filteranordnung nach einem der Ansprüche 2 - 3,
**dadurch gekennzeichnet, dass**
die Aufnahmerinne (24) mit Vergussmasse (30) befüllt ist und die Vergussmasse (30) den Kopfrahmen (20) stoffschlüssig mit dem Luftfilter (10) verbindet.

5. Filteranordnung nach Anspruch 3 und 4,
**dadurch gekennzeichnet, dass**
Vergussmasse (30) durch die Öffnungen (25) ins Innere des Vierkantrohres (23) geflossen ist und Eckverbinder (22) und gerade Profile (21) miteinander stoffschlüssig verbindet.

6. Filteranordnung nach einem der Ansprüche 2 - 5,
**dadurch gekennzeichnet, dass**
die Aufnahmerinne (24) an ihrem freien Ende mit einer Kante in Form einer Rastnase (26) versehen ist, zum Einrasten des Luftfilters (10).

7. Filteranordnung nach einem der vorangehenden Ansprüche,
**dadurch gekennzeichnet, dass**
die geraden Profile (21) Stranggussteile sind.

8. Filteranordnung nach einem der vorangehenden Ansprüche,
**dadurch gekennzeichnet, dass**
der Kopfrahmen (20) aus vier geraden Profilen (21) und vier Eckverbindern (22) zusammengesetzt und rechteckig ausgeführt ist.

9. Filteranordnung nach einem der vorangehenden Ansprüche,
**dadurch gekennzeichnet, dass**
an dem Kopfrahmen (20) eine umlaufende Dichtung (27) angebracht ist, zum Abdichten der Filteranordnung (100) gegenüber einer diese aufnehmenden Filteraufnahme (40).

10. Filteranordnung nach einem der vorangehenden Ansprüche,
**dadurch gekennzeichnet, dass**
der Luftfilter (10) als quaderförmiger Schwebstofffilter und sein Rahmen (11) als Kunststoffrahmen ausgeführt ist.

11. Filteranordnung nach Anspruch 10,
**dadurch gekennzeichnet, dass**
der Schwebstofffilter als Filtermedium (13) plissiertes Glasfaserpapier besitzt.

12. Filteranordnung nach einem der vorangehenden Ansprüche,
**dadurch gekennzeichnet, dass**
ein weiterer den Luftfilter (10) aufnehmenden Kopfrahmen (20) vorgesehen ist, wobei beide Kopfrahmen (20) beabstandet zueinander sind.
